# EUROPÄISCHE PATENTSCHRIFT

(11) **EP 2 248 287 B1**
(45) Veröffentlichungstag und Bekanntmachung des Hinweises auf die Patenterteilung: **06.06.2012**
(21) Anmeldenummer: 09717023.7
(22) Anmeldetag: 27.02.2009
(51) Int. Cl.: H04B 17/00

(54) **VERFAHREN ZUR GENERIERUNG VON MEHRANTENNENSIGNALEN**
METHOD FOR GENERATING MULTI-ANTENNA SIGNALS
PROCÉDÉ DE PRODUCTION DE SIGNAUX POUR ANTENNES MULTIPLES

(30) Priorität: 07.03.2008 DE 102008013011
(43) Veröffentlichungstag der Anmeldung: 10.11.2010
(73) Patentinhaber: Rohde & Schwarz GmbH & Co. KG, 81671 München (DE)
(72) Erfinder: GERLACH, Heino, 81541 München (DE)
(74) Vertreter: Beder, Jens
(86) Internationale Anmeldenummer: PCT/EP2009/001427
(87) Internationale Veröffentlichungsnummer: WO 2009/109340

(56) Entgegenhaltungen:
- EP-A- 1 858 180
- WO-A-03/041308
- WO-A-2008/132268
- US-A1- 2003 050 020

## Beschreibung

Die Erfindung betrifft ein Verfahren zur Generierung von Mehrantennensignalen bei dem die Ausbreitungsbedingungen zwischen jeweils einer Sender-Antenne und einer Empfänger-Antenne beschreibende Faktoren und Wichtungsfaktoren zur Wichtung von über jeweils eine Sender-Antenne zu übertragenden Signale erzeugt werden. Unter Berücksichtigung der Wichtungsfaktoren und der die Ausbreitungsbedingungen beschreibenden Faktoren wird für jede Empfänger-Antenne ein ankommendes Empfangssignal berechnet. Für jeweils eine Empfänger-Antenne wird ein Sendesignal erzeugt, welches dem berechneten Empfangssignal für diese Empfänger-Antenne entspricht, und das Sendesignal wird durch einen Signalgenerator an eine zugeordnete Empfängerantenne übertragen.

Aus der Veröffentlichung DE 11 2006 000 207 T5 ist es bekannt, einen Funkkanal zwischen einem Sender und einem Empfänger für ein MIMO-System zu simulieren. In dem offenbarten Verfahren wird eine Funkverbindung zwischen zumindest einer Störsignalquelle und dem Empfänger in Echtzeit in einem Funkkanalblock simuliert. Die Simulationsergebnisse der Störung, welche von dem Funkkanalblock ausgegeben werden, werden in einem Speicher gespeichert. Danach wird eine Funkverbindung zwischen dem Sender und dem Empfänger in dem Funkkanalblock simuliert. Die Simulationsergebnisse der Funkverbindung, welche ebenfalls von dem Funkkanalblock ausgegeben werden, werden einem Addierer hinzugefügt. Den Simulationsergebnissen der Funkverbindung werden mittels des Addieres die aus dem Speicher gelesenen Simulationsergebnisse der Störung in Echtzeit hinzugefügt. Die in diesem Verfahrensschritt in dem Addierer entstehenden endgültigen Simulationsergebnisse werden in Form eines Ausgangssignals Radiofrequenzteilen eines Empfängers zugeführt.

Sowohl die Störquellen als auch der Sender können entweder externe Signalquellen sein oder in einem Simulator erzeugt werden. Die Signale des Senders werden der Vorrichtung zur Durchführung der Kanalsimulation, welche den Funkkanalblock und den Speicher aufweist, per Funk zugeführt. Die Vorrichtung zur Durchführung der Kanalsimulation ist eine von dem Sender getrennte Einheit. Das Eingangssignal, welches der Sender der Vorrichtung zur Durchführung der Kanalsimulation zuführt, ist ein Hochfrequenzsignal.

Dadurch, dass die Vorrichtung zur Durchführung der Kanalsimulation und der Sender getrennte Einheiten sind, sind in beiden getrennten Einheiten jeweils Hardwarekomponenten zur Durchführung der Kommunikation zwischen den getrennten Einheiten notwendig. Dadurch ist das System zur Durchführung der Kanalsimulation komplex und kostenintensiv. Zudem kann eine Kanalsimulation nicht durch den Sender allein durchgeführt werden. Somit ist zur Kanalsimulation immer eine zusätzliche Vorrichtung vonnöten, welche zusätzliches Volumen in Anspruch nimmt. Der Sender und die Vorrichtung zur Durchführung des Verfahrens müssen zur Durchführung des Verfahrens jeweils einzeln eingestellt werden. Das offenbarte Verfahren zur Kanalsimulation ist somit komplex.

Aus der WO 03/041308 A ist ein Verfahren zur Generierung von Mehrantennensignalen bekannt. Es werden die Ausbreitungsbedingungen zwischen jeweils einer Sender-Antenne und einer Empfangs-Antenne beschreibende Kanalkoeffizienten erzeugt. Zur Wichtung von über jeweils eine Sender-Antenne zu übertragende Signale werden Wichtungsfaktoren erzeugt und das Ankommen der Empfangssignale wird unter Berücksichtigung dieser Wichtungsfaktoren und der Ausbreitungsbedingungen für jede Empfänger-Antenne berechnet.

Der Erfindung liegt daher die Aufgabe zugrunde, ein einfaches Verfahren zur Generierung von Mehrantennesignalen zu schaffen, welches kostensparend, mit nur einem Gerät, und einfach durchgeführt werden kann.

Die Aufgabe wird durch das Verfahren mit den Merkmalen des Anspruchs 1 gelöst.

Das Verfahren zur Generierung von Mehrantennensignalen umfasst mehrere Verfahrenschritte. Es werden die Ausbreitungsbedingungen zwischen jeweils einer zu simulierenden Sender-Antenne und einer Empfänger-Antenne beschreibende Faktoren und Wichtungsfaktoren zur Wichtung von über jeweils eine zu simulierende Sender-Antenne zu übertragende Signale erzeugt. Durch die Faktoren können zu simulierende Bedingungen dargestellt bzw. beschrieben werden. Dadurch eignet sich das erfindungsgemäße Verfahren auch zur Simulation von Signalübertragungen. Für jede zu Empfänger-Antenne wird ein ankommendes zu simulierendes Empfangssignal unter Berücksichtigung der Wichtungsfaktoren und der die Ausbreitungsbedingungen beschreibenden Faktoren berechnet. Ein solches simuliertes Empfänger-antennenspezifisches Empfangssignal kann somit allgemeine oder Empfänger-antennenspezifische zu simulierende Bedingungen berücksichtigen bzw. deren Wirkung enthalten. Für jeweils eine Empfänger-Antenne wird durch einen Signalgenerator ein Sendesignal erzeugt, welches dem berechneten zu simulierenden Empfangssignal für diese Empfänger-Antenne entspricht. Das Sendesignal wird an eine zugeordnete reale Empfänger-Antenne bzw. an einen realen Empfänger, z.B. über Kabel, gesendet bzw. übertragen.

In den Unteransprüchen sind vorteilhafte Ausführungsformen des erfindungsgemäßen Verfahrens dargestellt.

Vorzugsweise wird ein Basisbandsignal von dem Signalgenerator zu dem/den Empfangsausrichtungen übertragen. Dadurch kann ein unnötiges Modulieren und Demodulieren eines an den realen Empfänger zu übertragenden Signals vermieden werden. Dadurch kann auch der Hardwareaufwand, der für ein unnötiges Modulieren und Demodulieren vonnöten ist, vermieden werden.

In einer vorteilhaften Ausführungsform wird ein Hochfrequenzsignal übertragen. Dadurch kann auch realen Empfängern, welche nur Hochfrequenzsignale empfangen können, simulierte Empfangssignale bzw. Signale zugesandt werden.

Bevorzugt wird zur Erzeugung des Hochfrequenzsignals zunächst zu jedem berechneten Empfangssignal ein Basisbandsignal erzeugt. Somit kann ein an einen oder mehrere reale Empfänger zu übertragendes Signal von verschiedenen Stellen des Signalwegs aus als Basisbandsignal oder Hochfrequenzsignal ausgegeben werden.

Ein bevorzugtes Ausführungsbeispiel des erfindungsgemäßen Verfahrens zur Generierung von Mehrantennensignalen ist in der Zeichnung dargestellt und wird in der nachfolgenden Beschreibung detailliert erläutert. Es zeigen:
- Fig. 1: ein 4x2-MIMO System gemäß dem Stand der Technik;
- Fig. 2: eine Alternative zu dem 4x2-MIMO System aus Fig. 1;
- Fig. 3: ein einfaches mathematisches Systemmodel für einen Teil der Simulation in Matrixschreibweise;
- Fig. 4: ein erstes Ausführungsbeispiel des erfindungsgemäßen Verfahrens;
- Fig. 5: ein zweites Ausführungsbeispiel des erfindungsgemäßen Verfahrens;
- Fig. 6: ein drittes Ausführungsbeispiel des erfindungsgemäßen Verfahrens.

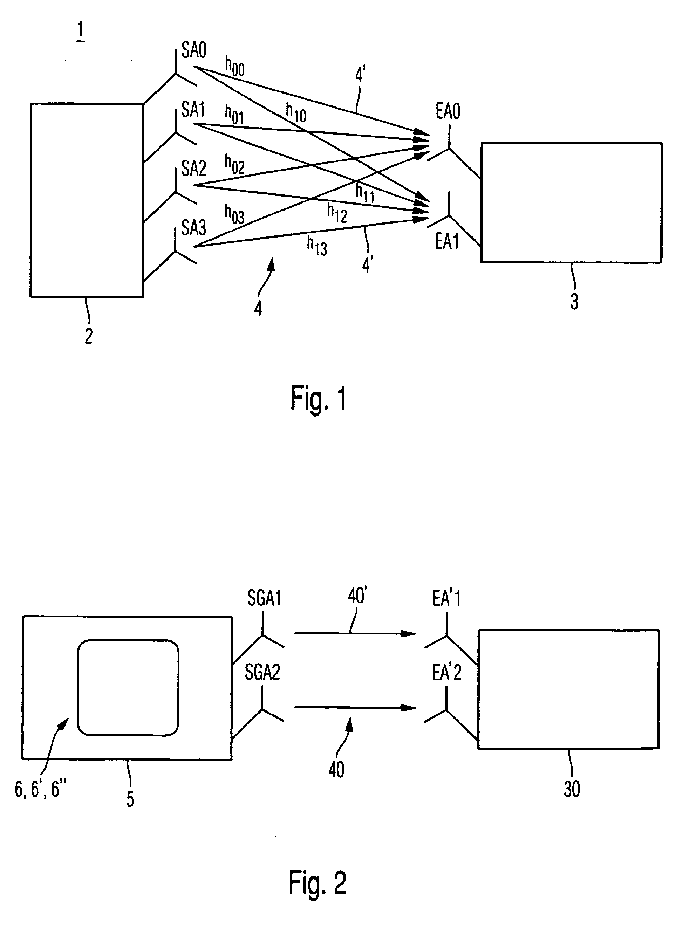

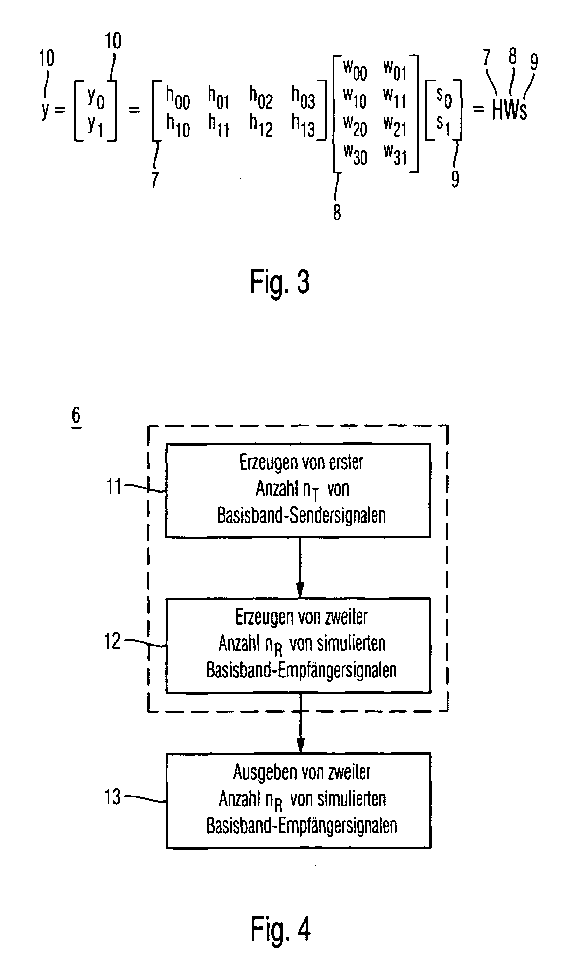

Fig. 1 zeigt ein 4x2 MIMO System 1 aus dem Stand der Technik. In einem Ausführungsbeispiel des erfindungsgemäßen Verfahrens wird dieses MIMO System simuliert. Das MIMO System 1 umfasst einen zu simulierenden Sender 2 und einen Empfänger .3. Der zu simulierende Sender 2 und der Empfänger 3 sind über einen zu simulierenden Gesamtkanal 4 verbunden. In dem zu simulierenden Gesamtkanal 4 findet ein Hochfrequenz-Funkverkehr zwischen dem zu simulierenden Sender 2 und dem Empfänger 3 statt. Der Sender 2 sendet über die Sender-Antennen SA0 - SA3 Anfangssignale aus. Der Empfänger 3 empfängt über seine Empfänger-Antennen EAO, EA1 Empfangssignale. Der zu simulierende Gesamtkanal 4 setzt sich aus mehreren zu simulierenden Einzelkanälen 4' zusammen. Die zu simulierenden Einzelkanäle 4' verbinden jeweils eine der Sender-Antennen SA0, SA1, SA2, SA3 mit je einer der Empfänger-Antennen EA0, EA1. Dadurch, dass die Kommunikation über mehr als einen zu simulierenden Einzelkanal 4' abläuft, können höhere Datenraten, ein höherer Signal-zu-Rausch-Störabstand oder Diversitätsgewinne erzielt werden. Jedem der zu simulierenden Einzelkanäle 4' ist ein komplexwertiger Kanalkoeffizient hᵢⱼ zugeordnet, welcher die Ausbreitungsbedingungen zwischen dem Sender 2 und dem Empfänger 3 in dem jeweiligen zu simulierenden Einzelkanal 4' modelliert. Die komplexwertigen Kanalkoeffizienten hᵢⱼ werden in einer Kanalmatrix 7 aufgenommen, mittels derer die Ausbreitungsbedingungen zwischen dem Sender 2 und dem zu simulierenden Empfänger 3 in dem zu simulierenden Gesamtkanal 4 modelliert bzw. beschrieben werden. Die Kanalmatrix 7 ist in Figur 3 dargestellt. Die zu simulierende Empfangssignale werden unter Berücksichtigung der Kanalmatrix 7 berechnet.

In der Figur 2 ist eine Alternative zu dem zu simulierenden 4x2-MIMO System 1 aus Fig. 1 gezeigt. Die Alternative umfasst z.B. einen Signalgenerator als ein Sendegerät 5 mit einer ersten Sendegerät-Antenne SG1 und einer zweiten Sendegerät-Antenne SG2. In dem Sendegerät 5 wird, im Zuge der Durchführung eines ersten, zweiten oder dritten Ausführungsbeispiels 6, 6', 6" des erfindungsgemäßen Verfahrens, eine Simulation des zu simulierenden Hochfrequenz-Funkverkehrs zwischen dem zu simulierenden Sender 2 und dem zu simulierenden Empfänger 3 durchgeführt. Das Sendegerät 5 kommuniziert über die erste Sendegerät-Antenne SG1 und/oder der zweiten Sendegerät-Antenne SG2 und über einen Gesamtkanal 40 mit einer ersten Empfänger-Antenne EA'1 und/oder einer zweiten Empfänger-Antenne EA'2 eines Empfängers 30. Die erste
Sendegerät-Antenne SG1 und die erste Empfänger-Antenne EA'1 bzw. die zweite Sendegerät-Antenne SG2 und die zweite Empfänger-Antenne EA'2 sind jeweils über ein Einzelkanal 40' verbunden. Die Kommunikation über die Einzelkanäle 40' erfolgt über Funk. Alternativ kann ein Basisband-Signal-Verkehr zwischen Sendegerät 5 und Empfänger 30 erfolgen. Der Basisband-Signal-Verkehr kann auch über ein oder mehrere Kabel erfolgen. Anstelle der Funkverbindung kann auch eine kabelgebundene Übertragung vorgesehen sein. Statt der Empfängerantennen EA1, EA2 ist dann jeweils z.B. eine Anschlussbuchse als Empfangseinrichtung vorgesehen.

Zur Durchführung der Simulation der Kommunikation zwischen dem zu simulierenden Sender 2 und dem zu simulierenden Empfänger 3 werden verschiedene Matrizen verwendet. In den Matrizen sind Koeffizienten enthalten, welche Informationen über die zu simulierenden Bedingungen darstellen. In der Fig. 3 sind zwei solche Matrizen dargestellt. Die Kanalmatrix 7 enthält Kanalkoeffizienten hᵢⱼ mit Information über die Ausbreitungsbedingungen der zu simulierenden Einzelkanäle 4' des zu simulierenden Gesamtkanals 4. Die Wichtungsmatrix 8 enthält Wichtungskoeffizienten wₖₗ und mit diesen Informationen über die Gewichtung von Amplitude und Phase für jede der zu simulierenden Sender-Antennen SA0, SA1, SA2, SA3 und für jede der Empfänger-Antennen EA0, EA1. Die Wichtungsmatrix 8 beschreibt zu simulierende Bedingungen. Durch Ausmultiplizieren der Kanalmatrix 7 mit der Wichtungsmatrix 8 ergibt sich eine Gewichtungsfaktormatrix A=HW, welche Koeffizienten mit Information über die zu simulierende Kommunikation zwischen dem zu simulierenden Sender 2 und dem zu simulierenden Empfänger 3 enthält. Die zu simulierende Empfangssignale werden so unter Berücksichtigung der Wichtungsmatrix 8 bzw. der Gewichtungsfaktormatrix A=HW berechnet. Die Gewichtungsfaktormatrix A=HW wird mit einem ersten Vektor 9 multipliziert, dessen Komponenten sₘ Sendersignale bzw. Datensymbole darstellen. Die Multiplikation liefert einen zweiten Vektor 10, dessen Komponenten yₙ, die an den Empfänger-Antennen EA0, EA1 empfangenen Empfängersignale bzw. Unterträger darstellen. Das Beispiel erläutert ein OFDM (orthogonal frequency division multiplex) System.

Der erste Vektor 9 wird aus in dem Sendegerät 5 erzeugten Basisband-Sendersignalen in dem Sendegerät 5 berechnet. Die Berechnung des ersten Vektors 9 berücksichtigt Modulations-Effekte, welche bei einer zu simulierenden Modulation der Basisband-Sendersignale in zu sendende Kommunikations-Hochfrequenzsignale in dem zu simulierenden Sender 2 auftreten. Aus dem zweiten Vektor 10 werden in dem Sendegerät 5 die simulierten Basisband-Empfängersignale berechnet. Die Berechnung der simulierten Basisband-Empfängersignale aus dem zweiten Vektor 10 berücksichtigt Demodulations-Effekte, welche bei einer zu simulierenden Demodulation der empfangenen Kommunikations-Hochfrequenzsignale in dem zu simulierenden Empfänger 3 auftreten. Damit erfolgt die gesamte Simulation in dem Sendegerät 5. Die Simulation erzeugt die simulierten Basisband-Empfängersignale aus den erzeugten Basisband-Sendersignalen unter Berücksichtigung der Simulationsbedingungen ohne eine reale Modulation oder Demodulation von Basisbandsignalen. Die Simulation findet somit im Basisband statt.

Simulationsbedingungen werden durch die Kanalmatrix 7 und die Wichtungsmatrix 8 dargestellt bzw. beschrieben. Die Kanalmatrix 7 und die Wichtungsmatrix 8 können jeweils geänderten bzw. ausgewählten Simulationsbedingungen angepasst werden. Dazu werden ein oder mehrere Kanalkoeffizienten hᵢⱼ und/oder ein oder mehrere Wichtungskoeffizienten wₖₗ den geänderten bzw. ausgewählten Simulationsbedingungen angepasst.

Ein erstes Ausführungsbeispiel 6 des erfindungsgemäßen Verfahrens ist in Fig. 4 dargestellt. In einem ersten Verfahrensschritt 11 wird in dem Sendegerät 5 eine erste Anzahl n_{T} von Basisband-Sendersignalen oder Anfangssignalen erzeugt. In einem zweiten Verfahrensschritt 12 wird in dem Sendegerät 5 aus der ersten Anzahl n_{T} von Basisband-Sendersignalen eine zweite Anzahl n_{R} von simulierten Basisband-Empfängersignalen oder ankommenden Empfangssignalen oder zu simulierenden ankommenden Empfangssignalen erzeugt. Die Erzeugung der zweiten Anzahl n_{R} von simulierten Basisband-Empfängersignalen erfolgt wie oben beschrieben. In einem dritten Verfahrenschritt 13 wird die zweite Anzahl n_{R} von simulierten Basisband-Empfängersignalen durch das Sendegerät 5 ausgegeben. Dadurch kann auf die Simulationsergebnisse ohne Modulation bzw. Demodulation der simulierten Basisband-Empfängersignale zugegriffen werden. Der reale Empfänger 30 kann mittels eines oder mehrerer Kabel mit dem Sendegerät 5 zur Signalübertragung angeschlossen werden.

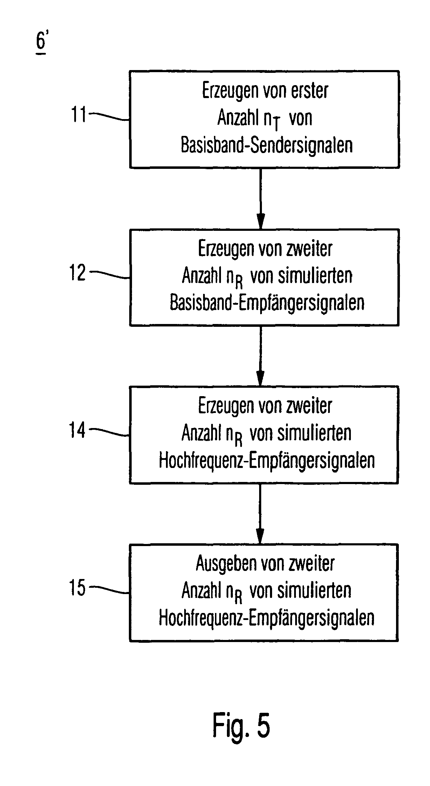

Ein zweites Ausführungsbeispiel 6' des erfindungsgemäßen Verfahrens ist in Fig. 5 dargestellt. Das erste und das zweite Ausführungsbeispiel haben den ersten Verfahrensschritt 11 und den zweiten Verfahrensschritt 12 gemeinsam. Statt dem dritten Verfahrenschritt 13 wird im zweiten Ausführungsbeispiel ein alternativer dritter Verfahrensschritt 14 durchgeführt, dem ein vierter Verfahrensschritt 15 folgt. In dem alternativen dritten Verfahrensschritt 14 wird aus der zweiten Anzahl n_{R} von simulierten Basisband-Empfängersignalen die zweite Anzahl n_{R} Hochfrequenz-Empfängersignalen erzeugt. Die zweite Anzahl n_{R} von simulierten Hochfrequenz-Empfängersignale liegt im Hochfrequenzbereich. Die zweite Anzahl n_{R} von simulierten Hochfrequenz-Empfängersignalen wird in dem vierten Verfahrensschritt 15 von dem Sendegerät 5 ausgegeben. Die Simulationsergebnisse werden von dem Sendegerät 5 mittels der zweiten Anzahl n_{R} von simulierten Hochfrequenz-Empfängersignalen über die Signalgerät-Antennen SGA1, SGA2 ausgegeben, und per Funk über den Gesamtkanal 40 an die Empfänger-Antennen EA'1, EA'2 des realen Empfängers 30 gesendet.

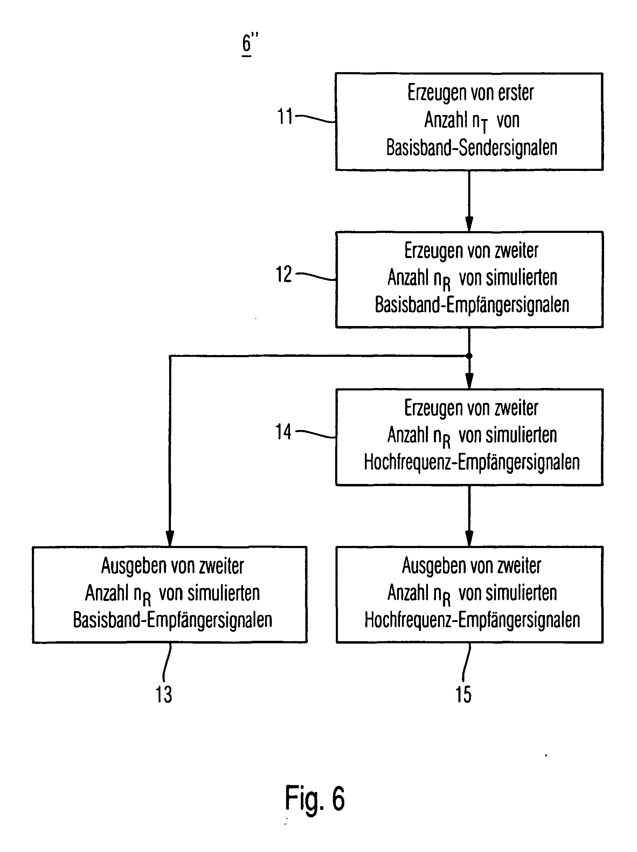

In dem in der Figur 6 dargestellten dritten Ausführungsbeispiel 6" sind die Merkmale des ersten Ausführungsbeispiels 6 und die Merkmale des zweiten Ausführungsbeispiels 6' kombiniert. D.h. es werden der erste, der zweite, der dritte, der alternative dritte, sowie der vierte und der fünfte Verfahrenschritt ausgeführt. Dadurch sind die Vorteile des ersten und des zweiten Ausführungsbeispiels kombiniert. Beispielsweise können gleichzeitig sowohl die zweite Anzahl n_{R} von simulierten Basisband-Empfängersignalen als auch die zweite Anzahl n_{R} von simulierten Hochfrequenz-Empfängersignalen einem gemeinsamen oder jeweils einem separaten Gerät zugeführt werden. Das Gerät bzw. die Geräte können auf individuelle Weise die jeweils empfangenen Signale bzw. Simulationsergebnisse auswerten. Dadurch kann bei einem Simulationsanalyseverfahren, welches verschiedene Simulationsbedingungen jeweils auf verschiedene Weise bzw. von verschiedenen Darstellungsformen ausgehend analysiert, Zeit gespart werden. Eine Simulation kann gleichzeitig auf mehrere Arten bzw. von mehreren Darstellungsformen ausgehend Analysiert werden.

Die Zahlen n_{T} und n_{R} sind jeweils unabhängig voneinander aus der Menge der natürlichen Zahlen frei wählbar und werden letztlich durch das zugrundeliegende Übertragungsverfahren, z.B. 3GPPLTE oder WiMax festgelegt. Zur Generierung von Mehrantennensignalen muss jedoch mindestens eine der Zahlen n_{T} bzw. n_{R} größer als eins sein. Sowohl die Zahl der Zeilen und Spalten bzw. Koeffizienten in den Matrizen 7, 8 als auch die Zahl der Komponenten in dem ersten Vektor 9 und in dem zweiten Vektor 10 hängen von n_{R} und n_{T} ab.

Die Koeffizienten der Matrizen 7, 8 können jeweils separat geändert werden. Dadurch können verschiedene Simulationsbedingungen modelliert werden. Mithilfe der Kanalmatrix 7 werden z.B. Ausbreitungsbedingungen in dem zu simulierenden Gesamtkanal 4 simuliert. Die verschiedenen Kanalbedingungen bzw. Simulationsbedingungen lassen sich direkt am Sendegerät 5 einstellen.

In einem bevorzugten Ausführungsbeispiel des erfindungsgemäßen Verfahrens zur Generierung von Mehrantennensignalen werden alle Verfahrenschritte bis hin zur Signalausgabe durch das Sendegerät 5 durchgeführt. In dem Verfahren zur Generierung von Mehrantennensignalen wird die erste Anzahl n_{T} von Basisband-Sendersignalen oder Anfangssignalen und die zweite Anzahl n_{R} von simulierten Basisband-Empfängersignalen oder ankommenden Empfangssignalen in dem Sendegerät 5 erzeugt. Das Basisband-Sendersignal bzw. die Basisband-Sendersignale werden für eine Simulation, welche in dem Sendegerät 5 durchgeführt wird, bereitgestellt. Das durch die Simulation erzeugte simulierte Basisband-Empfängersignal bzw. die durch die Simulation erzeugten simulierten Basisband-Empfängersignale enthalten die Simulationsergebnisse. Das simulierte Basisband-Empfängersignal bzw. die simulierten Basisband-Empfängersignale können direkt und/oder nach einer Weiterverarbeitung durch das Sendegerät 5 von dem Sendegerät 5 ausgegeben werden.

Besonders bevorzugt wird zum Erzeugen der zweiten Anzahl n_{R} simulierten Basisband-Empfängersignale die Wichtungsmatrix 8 verwendet. In der Wichtungsmatrix 8 ist die Information über die Gewichtung für Amplitude und Phase für jede simulierte bzw. zu simulierende Sender-Antenne eines zu simulierenden Senders und für jede simulierte bzw. zu simulierende Empfänger-Antenne eines zu simulierenden Empfängers enthalten. Dadurch stellt die Wichtungsmatrix 8 Information bzw. Informationen über eine oder mehrere Simulationsbedingungen dar. Die Erzeugung der zweiten Anzahl n_{R} simulierter Basisband-Empfängersignale trägt somit der oder den simulierten Bedingungen Rechnung.

Vorzugsweise wird zumindest ein Koeffizient wₖₗ der Wichtungsmatrix 8 den zu simulierenden Bedingungen angepasst. Durch eine solche Anpassung von einem oder gegebenenfalls mehreren Koeffizienten wₖₗ, können Bedarfsgerecht Informationen zu verschiedenen zu simulierenden Bedingungen am bzw. im simulierten Sender bzw. dessen Ausgang durch die Wichtungsmatrix 8 dargestellt bzw. beschrieben werden.

Zum Erzeugen der zweiten Anzahl n_{R} simulierten Basisband-Empfängersignale wird besonders bevorzugt die Kanalmatrix 7 verwendet. Durch die Kanalmatrix 7 wird der Gesamtkanal 4 zwischen dem zu simulierenden Sender 2 mit einer oder mehreren zu simulierenden Sender-Antennen oder Senderantennen SA0 - SA3 und einem Empfänger 3 mit einer oder mehreren Empfänger-Antennen oder Empfangsantennen EA0, EA1 dargestellt. Dadurch stellt die Kanalmatrix 7 Information über weitere Simulationsbedingungen dar. Die Erzeugung der zweiten Anzahl n_{R} simulierter Hochfrequenz-Empfangsantennensignale trägt somit auch den weiteren Simulationsbedingungen Rechnung.

Vorzugsweise wird ein Koeffizient hᵢⱼ der Kanalmatrix den zu simulierenden Bedingungen angepasst. Indem ein oder gegebenenfalls mehrere Koeffizienten hᵢⱼ der Kanalmatrix 7 angepasst werden, können Informationen zu verschiedenen zu simulierenden Bedingungen im dem zu simulierenden Gesamtkanal 4 zwischen zu simulierenden Sender 2 und zu simulierenden Empfänger 3 durch die Kanalmatrix 7 dargestellt werden.

In einem vorteilhaften Ausführungsbeispiel wird die zweite Anzahl n_{R} simulierter Basisband-Empfängersignale von dem Sendegerät 5 ausgegeben. Die erste Anzahl n_{T} von Basisband-Sendersignalen wird in dem Sendegerät 5 zu der zweiten Anzahl n_{R} simulierter Basisband-Empfängersignale weiterverarbeitet. Diese Weiterverarbeitung kann unter Verwendung von spezifischen Informationen über zu simulierende Bedingungen durchgeführt werden. Dadurch ist es möglich, die Simulation im Basisband durchzuführen. Zur Erzeugung eines Simulationsergebnisses sind weder eine Modulation noch eine Demodulation nötig. Das Simulationsergebnis liegt im Sendegerät 5 im Basisband vor. Das Ergebnis der Simulation ist in der im Sendegerät 5 erzeugten zweiten Anzahl n_{R} simulierter Basisband-Empfängersignale enthalten. Es kann somit auf dieses Simulationsergebnis zugegriffen werden, ohne die erste Anzahl n_{T} von Basisband-Sendersignalen und/oder die zweite Anzahl n_{R} simulierter Basisband-Empfängersignale zu modulieren, senden, empfangen und/oder anschließend demodulieren zu müssen. Dadurch wird ein unnötiges Modulieren der ersten Anzahl n_{T} von Basisband-Sendersignalen in Hochfrequenzsignale zur anschließenden Durchführung einer Simulation vermieden. Ein Demodulieren von Hochfrequenzsignalen, welche Ergebnis einer Simulation sind, zur Erzeugung der zweiten Anzahl n_{R} simulierter Basisband-Empfängersignale, kann dadurch ebenfalls vermieden werden. Insgesamt ist das Verfahren dadurch sehr hardwaresparend, kostensparend und einfach durchzuführen.

Aus der zweiten Anzahl n_{R} simulierter Basisband-Empfängersignale wird in einem bevorzugten Ausführungsbeispiel die zweite Anzahl n_{R} simulierter Hochfrequenz-Empfängersignale erzeugt. Diese simulierten Hochfrequenz-Empfängersignale können von dem Sendegerät an einen Empfänger, z.B. über Funk oder Kabelverbindung, zugeführt werden.

Vorzugsweise wird die zweite Anzahl n_{R} simulierter Hochfrequenz-Empfängersignale von dem Sendegerät 5 ausgegeben. Dabei kann die Anzahl der verwendeten Sendeantennen SGA1, SGA2 des Sendegeräts 5 bzw. die Anzahl der verwendeten Empfangsantennen oder Empfänger-Antennen EA'1, EA'2 des realen Empfängers 30 frei gewählt werden. Vorzugsweise sind beide Anzahlen gleich. Alternativ können anstelle von Antennen Kabelanschlüsse und anstelle einer Funkverbindung ein oder mehrere Kabel verwendet werden.

Simulationsergebnisse können über die zweite Anzahl n_{R} simulierter Basisband-Empfängersignale im Basisband und/oder über die zweite Anzahl n_{R} simulierter Hochfrequenz-Empfangsantennensignale im Hochfrequenzbereich dem realen Empfänger 30 zugeführt werden. Die zu übertragenden Signale werden durch einen Signalgenerator erzeugt, in dem auch die erfindungsgemäße Simulation der Übertragungswege erfolgt.

Die Erfindung ist nicht auf die dargestellten Ausführungsbeispiele beschränkt.

## Patentansprüche

1. Verfahren zur Generierung von Mehrantennensignalen mit folgenden Verfahrensschritten:
- Erzeugen von die Ausbreitungsbedingungen zwischen jeweils einer Sender-Antenne (SA0, SA1, SA2, SA3) und einer Empfänger-Antenne (EA0, EA1) beschreibenden Kanalkoeffizienten (hᵢⱼ)
- Erzeugen von Wichtungsfaktoren (wᵢⱼ) zur Wichtung von über jeweils eine Sender-Antenne (SA0, SA1, SA2, SA3) an eine Empfänger-Antenne (EA0, EA1) zu übertragende Signale
- Berechnen eines ankommenden Empfangssignals für jede Empfänger-Antenne (EA0, EA1)unter Berücksichtigung der Wichtungsfaktoren (wᵢⱼ) und der die Ausbreitungsbedingungen beschreibenden Faktoren (hᵢⱼ) aus den Anfangssignalen der Sendeantennen (SAO, SA1, SA2, SA3)
- Erzeugen eines Empfängersignals für jeweils eine Empfänger-Antenne (EA0, EA1), welches dem berechneten Empfangssignal für diese Empfänger-Antenne (EA0, EA1) entspricht, durch einen Signalgenerator
- Übertragen des erzeugten Empfängersignals an eine zugeordnete Empfangseinrichtung (EA'0, EA'1).

2. Verfahren nach Anspruch 1,
**dadurch gekennzeichnet,**
**dass** ein Basisbandsignal übertragen wird.

3. Verfahren nach Anspruch 1,
**dadurch gekennzeichnet,**
**dass** ein Hochfrequenzsignal übertragen wird.

4. Verfahren nach Anspruch 3,
**dadurch gekennzeichnet,**
**dass** zur Erzeugung des Hochfrequenzsignals zunächat zu jedem berechneten Empfangssignal ein Basisbandsignal erzeugt wird.

## Claims

1. Method of generating multi-antenna signals, comprising the following steps:
- producing channel coefficients (hᵢⱼ) that describe the propagation conditions between, in each case, a transmitter antenna (SA0, SA1, SA2, SA3) and a receiver antenna (EAO, EA1)
- producing weighting factors (wᵢⱼ) for weighting signals that are to be transmitted via a transmitter antenna (SA0, SA1, SA2, SA3) to a receiver antenna (EAO, EA1)
- calculating an incoming receiving signal for each receiver antenna (EAO, EA1) taking account of the weighting factors (wᵢⱼ) and the factors (hᵢⱼ) that describe the propagation conditions, from the initial signals of the transmitter antennas (SA0, SA1, SA2, SA3)
- producing a receiver signal for a receiver antenna (EAO, EA1) in each case, which corresponds to the calculated receiving signal for this receiver antenna (EAO, EA1), by means of a signal generator
- transferring the receiver signal generated to an associated receiver device (EA'0, EA'1).

2. Method according to claim 1,
**characterised in that** a baseband signal is transmitted.

3. Method according to claim 1,
**characterised in that** a high frequency signal is transmitted.

4. Method according to claim 3,
**characterised in that** in order to generate the high frequency signal first of all a baseband signal is generated for each receiving signal calculated.

## Revendications

1. Procédé pour générer des signaux d'antennes multiples, comprenant les étapes de procédé suivantes :
- la production de coefficients de canal (hᵢⱼ) décrivant les conditions de propagation entre respectivement une antenne d'émetteur (SA0, SA1, SA2, SA3) et une antenne de récepteur (EAO, EA1)
- la production de facteurs de pondération (wᵢⱼ) pour la pondération de signaux à transmettre à une antenne de récepteur (EAO, EA1) par le biais de respectivement une antenne d'émetteur (SA0, SA1, SA2, SA3)
- le calcul d'un signal de réception entrant pour chaque antenne de récepteur (EAO, EA1) avec prise en compte des facteurs de pondération (wᵢⱼ) et des facteurs (hᵢⱼ) décrivant les conditions de propagation à partir des signaux initiaux des antennes d'émission (SA0, SA1, SA2, SA3)
- la production, par un générateur de signaux, d'un signal de récepteur, pour respectivement une antenne de récepteur (EAO, EA1), qui correspond au signal de réception calculé pour cette antenne de récepteur (EAO, EA1)
- la transmission du signal de récepteur produit à un équipement de réception affecté (EA'0, EA'1).

2. Procédé selon la revendication 1,
**caractérisé en ce**
**qu'**un signal de bande de base est transmis.

3. Procédé selon la revendication 1,
**caractérisé en ce**
**qu'**un signal haute fréquence est transmis.

4. Procédé selon la revendication 3,
**caractérisé en ce que**,
pour la production du signal haute fréquence, un signal de bande de base est d'abord produit pour chaque signal de réception calculé.
